# EUROPEAN PATENT SPECIFICATION

(11) **EP 3 182 564 B1**
(45) Date of publication and mention of the grant of the patent: **09.07.2025**
(21) Application number: 16204771.6
(22) Date of filing: 16.12.2016
(51) Int. Cl.: H02K 11/20, H02K 11/215, H02K 11/25, H02K 1/20, H02P 29/00

(54) **ELECTRIC MACHINE ASSEMBLY AND DETECTING DEVICE OF THE ELECTRIC MACHINE ASSEMBLY**
ELEKTRISCHES MASCHINENAGGREGAT UND DETEKTOR DES ELEKTRISCHEN MASCHINENAGGREGAT
ENSEMBLE DE MACHINE ÉLECTRIQUE ET DISPOSITIF DE DÉTECTION DE L'ENSEMBLE DE MACHINE ÉLECTRIQUE

(30) Priority: 17.12.2015 IT UB20159643
(43) Date of publication of application: 21.06.2017
(73) Proprietor: ANSALDO ENERGIA S.p.A., 16152 Genova (IT)
(72) Inventor: D'AGOSTINO, Fabrizio, 16143 GENOVA (IT); BIONDI, Roberto, 16152 GENOVA (IT)
(74) Representative: Studio Torta S.p.A.

(56) References cited:
- EP-A1- 1 322 026
- WO-A2-2009/003478
- DE-A1- 102010 046 520
- US-A1- 2005 264 250
- US-B2- 8 766 562

## Description

The present invention relates to an electric machine assembly; a detecting device for measuring parameters of a rotary electric machine; an electric energy generating plant; a method for controlling an electric machine assembly and a method for installing the detecting device in the rotary electric machine.

Generally speaking, an electric energy generating plant, for supplying electric energy to an electric power network, comprises an electric machine assembly comprising a rotary electric machine; an electric energy converter arranged between the rotary electric machine and an electric power network; and a control device coupled to the converter and to the electric machine assembly.

In use, the control device is configured to control the energy converter and thus the rotary electric machine so as to regulate the torque and make it work in certain conditions.

Machines with a control device are disclosed in EP 1 322 026 and DE 2010 046 520.

However, in some cases the operating conditions may be such as to damage the rotary electric machine.

The purpose of the present invention is therefore to provide an electric machine assembly that reduces the inconveniences of the prior art.

According to the present invention, there is provided an electric machine assembly according to the claim 1.

Thanks to the present invention the magnetic induction values in the electric machine, in particular the axial component of the magnetic induction, can be measured directly and the electric machine assembly can be controlled according to the magnetic induction and temperature values measured.

The magnetic probe and the temperature probe are housed at the same detection point in the stator.

According to another embodiment of the present invention, the electric machine extends along the axis and comprises two axial end portions; the detecting device being housed in one of the axial end portions to detect an axial component of the magnetic induction.

According to another embodiment of the present invention, the electric machine assembly comprises a plurality of detecting devices arranged in the stator and radially to the axis at different distances from the axis, preferably the detecting devices are housed on a plane perpendicular to the axis.

According to another embodiment of the present invention, the stator comprises a plurality of windings that are associated with a plurality of phases; the detecting device being arranged between two windings each of which associated with different phases.

According to another embodiment of the present invention, the stator comprises a plurality of packs of ferromagnetic plates and the detecting device is glued to the plate preferably by means of a silicone resin.

According to another embodiment of the present invention, the detecting device is made according to any one of the claims from 10 to 14.

A further purpose of the present invention is to provide an electric energy generating plant that reduces the inconveniences of the prior art.

According to the present invention there is provided an energy generating plant comprising an electric machine assembly according to any one of the claims from 1 to 6; a measuring device coupled to the electric machine for detecting electric quantities of the electric machine; an electric energy converter coupled to the electric machine assembly; and a control unit coupled to the at least one detecting device for receiving the temperature and the magnetic induction values, to the measuring device for receiving the electric quantities of the electric machine, and to the converter; the control unit being configured to:
- calculate the reactive power of the electric machine according to the electric quantities detected;
- check the reactive power value according to the magnetic induction values detected and to the temperature values if the detected reactive power is negative.

According to another embodiment of the present invention, the control unit is configured to compare the temperature values detected with threshold temperature values and the magnetic induction values detected with magnetic induction threshold values and control the reactive power so as to decrease its absolute value if at least one of the two values exceeds the threshold.

According to another embodiment of the present invention, the plant comprises at least one further temperature sensor housed at least on the inside diameter of the electric machine or on a stack pressing device of the electric machine; the control unit being in communication with the further temperature sensor to receive the further temperature measurement and act to control the reactive power so as to decrease its absolute value if at least the further temperature measurement exceeds a further temperature threshold value.

A further purpose of the present invention is to provide a detecting device for detecting parameters of a rotary electric machine.

According to the present invention there is provided a detecting device for detecting parameters of a electric machine assembly of any one of the claims 1 to 5; the detecting device comprising a support which extends predominantly along an axis; a magnetic probe configured to detect a magnetic induction value and housed along the support; a thermal probe configured to detect a temperature value and housed along the support; and a casing which surrounds the thermal probe, the magnetic probe and the support; wherein the coupling element is coupled to one end of a stator of the electric machine; the coupling element is L-shaped to be coupled to one end of the stator.

According to a preferred embodiment of the present invention, the magnetic probe is of the Hall effect type and preferably the thermal probe is a thermistor.

According to another preferred embodiment of the present invention, the support is made of an insulating material, preferably fibreglass.

According to another preferred embodiment of the present invention, the casing is made of an insulating material, preferably fibreglass.

According to another preferred embodiment of the present invention, the device comprises a coupling element configured to be coupled to the electric machine, and a seat formed in the support for housing the magnetic probe and the thermal probe; the seat being arranged at a given distance from the coupling element to arrange the magnetic probe and the thermal probe inside the electric machine in a predetermined detecting point.

A further purpose of the present invention is to provide a method for controlling an electric machine assembly that reduces the inconveniences of the prior art.

According to the present invention there is provided a control method for controlling the electric machine assembly of any one of the claims 1 to 6; the electric machine assembly comprising a rotary electric machine; the method comprising: detecting a magnetic induction value of the electric machine, preferably an axial component value of the magnetic induction; detecting a temperature value of the electric machine; detecting electric quantities of the electric machine and calculating a reactive power value of the electric machine; adjusting the reactive power of the electric machine if the reactive power is negative and on the basis of the detected magnetic induction and/or temperature values.

According to a preferred embodiment of the present invention, the method comprises comparing the magnetic induction value with a magnetic induction threshold value and acting on the reactive power of the electric machine if the magnetic induction value exceeds the threshold value.

According to a preferred embodiment of the present invention, the method comprises comparing the temperature value with a temperature threshold value and acting on the reactive power of the electric machine if the temperature value exceeds the threshold value.

According to a preferred embodiment of the present invention, the magnetic induction value is detected between two windings of a stator of the electric machine associated with two different phases of the stator.

According to a preferred embodiment of the present invention, the method comprises the step of detecting a plurality of temperature and magnetic induction values in a plurality of detecting points of a stator of the electric machine located radially to a rotation axis of the electric machine and spaced radially one with respect to the other.

A further purpose of the present invention is to provide a method for installing a detecting device in a rotary electric machine that reduces the inconveniences of the prior art.

According to the present invention there is provided a method for installing a detecting device in the rotary electric machine assembly of any one of the claims 1 to 6;; the detecting device comprising a thermal probe, a magnetic probe, a support and a casing: the method comprising the steps of: creating a seat in the support and housing the thermal probe and the magnetic probe in the seat; covering the support, the thermal probe and the magnetic probe with the casing; wherein the electric machine comprises a stator and a rotor; and the stator comprises a plurality of packs of ferromagnetic plates; the method comprising inserting the support in a channel radial to the axis of rotation of the electric machine and formed between two packs of plates.

The present invention will now be described with reference to the accompanying drawings, illustrating some non-limiting embodiments thereof, in which:
- figure 1 is a schematic diagram of an electric energy generating plant according to the present invention; and
- figure 2 is a front view, with parts shown as cross-sectional views and parts removed for the sake of clarity, of an electric machine assembly of the electric plant;
- figure 3 is a cross-sectional view along the plane III-III of the electric machine assembly of figure 2;
- figure 4 is a top view of a detecting device of the electric machine assembly in figure 2; and
- figure 5 is an exploded perspective view of figure 4;
- figure 6 is an enlarged view of a detail of figure 3; and
- figure 7 is a view from above of the view in figure 6.

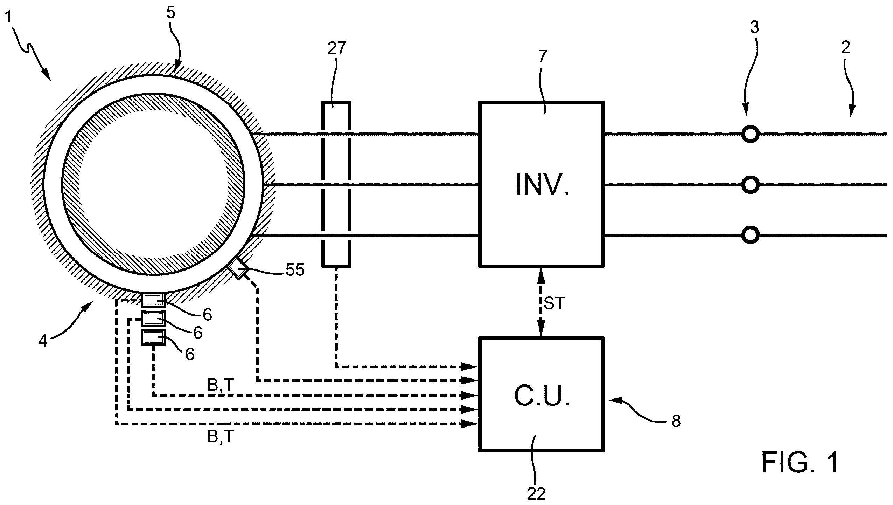

In figure 1, denoted as a whole by reference numeral 1 is an electric energy generating plant. The electric plant 1 exchanges electric energy with an electric power network 2 at a point of exchange 3.

The electric plant 1 comprises an electric machine assembly 4 comprising a rotary electric machine 5 and a plurality of detecting devices 6 coupled to the electric machine 5; an electric energy converter 7 coupled to the electric machine assembly 4; a control device 8 coupled to the electric energy converter 7 and to the electric machine assembly 4.

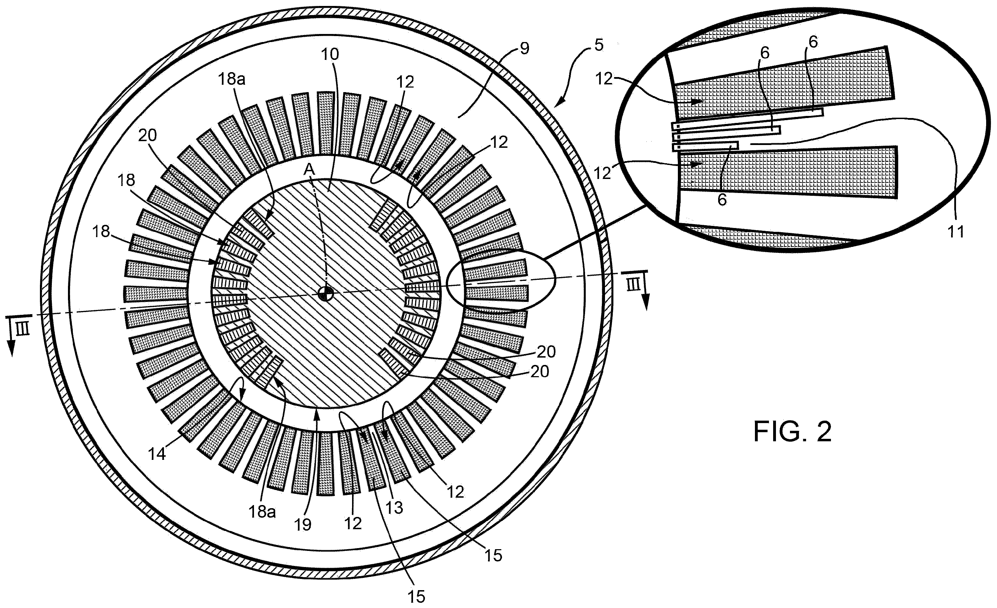

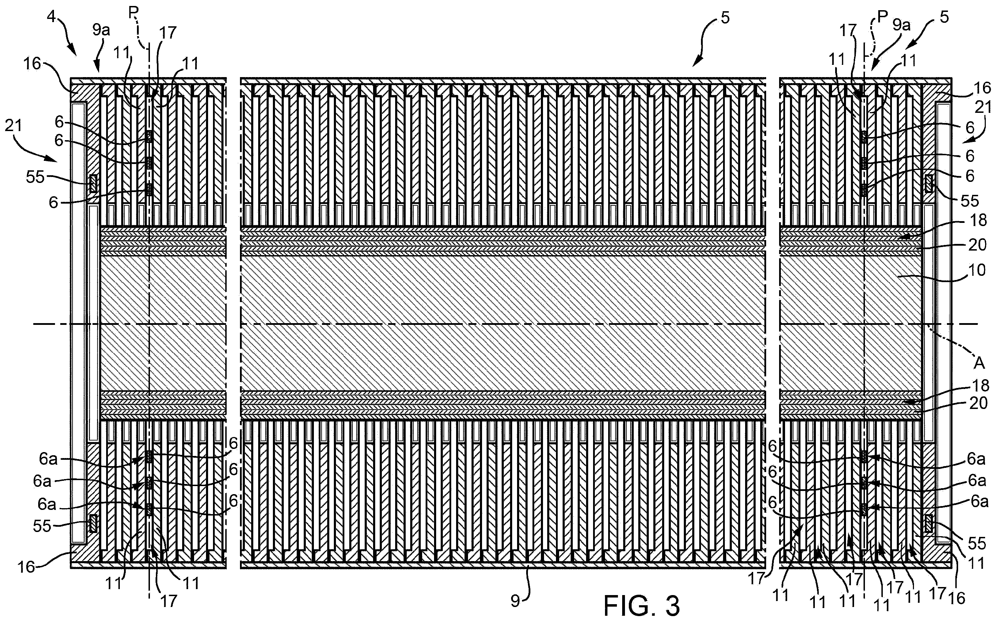

With reference to figures 2 and 3, the rotary electric machine 5 comprises a stator 9, and a rotor 10 coaxial with respect to one another about the axis A. In more detail, the electric machine 5 is a two-pole machine. In another embodiment, the electric machine 5 has more than two poles. With reference to figure 3, the stator 9 extends along the axis A and between two axial end portions 9a.

With reference to figures 2 and 3, the stator 9 is hollow and comprises a plurality of packs of stator plates 11. The stator 9 has a plurality of stator slots 12 and a plurality of stator teeth 13 spaced at intervals and formed along an inside surface 14 of the stator 9. In more detail, the packs of plates 11 are shaped so as to form the plurality of slots 12 and the plurality of teeth 13 which are arranged between two adjacent slots 12. Moreover, the stator 9 comprises a plurality of windings 15 housed in the plurality of slots 12 around the packs of stator plates 11. Each pack of plates 11 extends radially with respect to the axis A. The packs of stator plates 11 are arranged radially about the axis A. Furthermore, the packs of stator plates 11 are aligned with one another parallel to the axis A and are held together by means of two stack pressing devices 16 arranged at two axial ends 21 of the electric machine 5. The stack pressing devices 16 are, for example, stack pressing flanges. The stator 9 is provided with channels 17 obtained between adjacent packs of plates 11, which extend radially to the axis A. In other words, the stator 9 has one channel 17 for each pair of adjacent packs of plates 11. Thus, the packs of plates 11 are aligned parallel to the axis A without coming into contact with one another. The channels 17 define cavities between adjacent packs of plates 11 which act as cooling channels through which a cooling fluid, preferably air, can flow.

The rotor 10 defines a magnetic field and comprises a plurality of rotor slots 18 obtained along an outside surface 19 of the rotor 10. In particular, the plurality of slots 18 are grouped in two groups 18a of slots 18 so as to define two poles of the rotor 10.

The rotor 10 comprises windings 20 housed in the slots 18 to define a magnetic field. In another embodiment of the present invention not illustrated in the accompanying figures, the rotor 10 comprises permanent magnets housed in the rotor slots to define a magnetic field. In another embodiment of the present invention not illustrated in the accompanying figures, the electric machine is an asynchronous electric machine and the rotor comprises a squirrel cage to define an induced magnetic field.

With reference to figure 3, the detecting devices 6 are arranged in the channels 17 close to the axial end portions 9a of the electric machine 5. In more detail, the detecting devices 6 are arranged at respective detection points 6a of the electric machine 5, the axial distance of which from the axial end 21 is less than 20% of the total length of the electric machine 5.

In another embodiment of the present invention, the detecting devices 6 are arranged in one of the first ten channels 17, preferably one of the first five channels 17 moving axially from the axial end 21 towards the centre of the electric machine 5.

The detecting devices 6 are configured to detect an axial component of the magnetic induction B of the electric machine 5 at the respective detection point 6a. Furthermore, the detecting devices 6 are configured to measure a temperature at the respective detection point 6a.

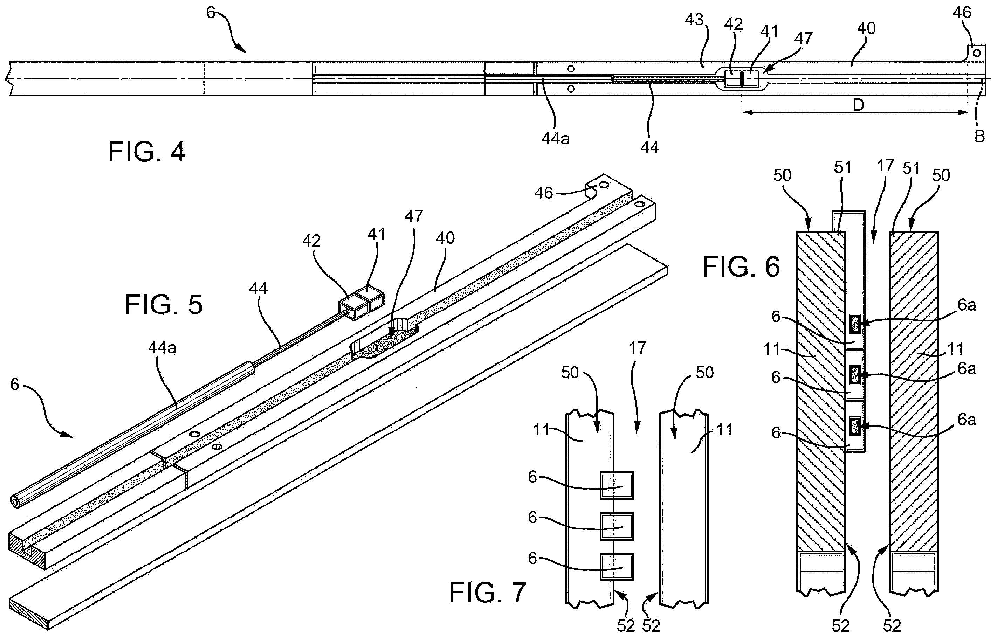

With reference to figures 5 and 6, the detecting device 6 comprises a support 40 which extends predominantly along an axis B; a magnetic probe 41 configured to detect a magnetic induction value and housed along the support 40; a thermal probe 42 configured to detect a temperature value and housed along the support 40; a connector (not illustrated in the accompanying figures); a connection cable 44 configured to connect the thermal probe 42 and the magnetic probe 41 to the connector and comprising a portion of cable 44a rigidly fixed to the support 40; and a casing 43 which surrounds the magnetic probe 41, the thermal probe 42, the support 40 and the portion of cable 44a.

In more detail, the magnetic probe 41 is of the Hall effect type and the thermal probe 42 is a thermistor. The scope of protection of the present invention also covers the case in which the magnetic probe 41 and the thermal probe 42 are provided in the form of a single sensing element incorporating the two functions and which provides a measurement of a magnetic induction B value and a temperature T value.

The casing 43 is made of an insulating material, preferably fibreglass.

The support 40 is made of an insulating material, preferably fibreglass, and comprises a cantilevered portion 46 extending radially with respect to the axis B that defines a coupling element 46 with the electric machine 5. In other words, the portion 46 is L-shaped to couple with the stator 9 of the electric machine 5.

Furthermore, the detecting device 6 comprises a seat 47 obtained in the support 40 to house the magnetic probe 41 and the thermal probe 42. The seat 47 is arranged along the support 40 at a given distance D from the coupling element 46 so that the magnetic probe 41 and the thermal probe 42 are arranged inside the electric machine 5 at the predetermined detection point 6a.

During the installation step, the detecting device 6 is glued to the electric machine 5, in particular to the stator 9 of the electric machine 5. In more detail, the detecting device 6 is inserted in one of the channels 17 as described previously and the coupling element 46 is coupled to one of the packs of plates 11 of the stator 9. With reference to figures 3 and 4, during the installation step, the support 40 is inserted in the channel 17 and glued by means of a silicone resin to one of the two packs of plates 11 that form said channel 17. The insertion is performed by inserting the detecting device 6 from the inside of the stator 9, that is to say, from the stator cavity towards the outside of the stator 9. In other words, the support 40 is inserted from the inside surface 14 towards an outside surface of the stator 9. As a consequence, the support 40 is inserted from the air gap towards the outside of the electric machine 5.

With reference to figure 6, the coupling element 46 abuts against a side surface 50 of the pack of plates 11. The side surface 50 of the pack of plates 11 faces the air gap. In other words, the portion 46 of the support 40 is coupled to a corner 51 of the plate 11 formed by a side surface 52 adjacent to the channel 17 and by the side surface 50.

The detecting device 6 is housed in the channel 17 so as to measure an axial component of the magnetic induction B. In particular, the axial component of the magnetic induction B relative to the axial end portion 9a of the electric machine 5.

With reference to figures 3, 5 and 6, the detecting devices 6 of the plurality of detecting devices 6 differ from one another in that their supports differ in length and the seats 46 are arranged at different distances from the coupling element 46. As a consequence, when the plurality of detecting devices 6 have been inserted in the channel 17, they house the thermal probes 42 and the magnetic probes 41 at different distances from the axis A along the channel 17 so as to obtain in this way a map of the different temperature T and magnetic induction B values inside the channel 17.

Furthermore, the detecting devices 6 may also be inserted in different channels 17, preferably the channels 17 that are chosen must all be at the same axial distance from the end 21. In other words, the detecting devices 6 must all be housed on a plane P that is perpendicular to the axis A, that is to say, the plane P is perpendicular to a plane on which the axis A lies. In figure 3, the detecting devices 6 are aligned radially to the axis A.

Furthermore, the detecting devices 6 are inserted in one of the channels 17 of the teeth 13 and in particular of one of the teeth 13 which is arranged between two different phases of the electric machine 5. In more detail, the windings 15 are housed in the slots 12 and grouped in phases, some adjacent windings 15 belong to the same phase, while other adjacent windings 15 belong to different phases. The channel 17 in which the detecting device 6 is inserted is chosen in one of the teeth 13 arranged between two windings 15 with different phases, so that the magnetic induction B and the temperature T are measured between two different phases.

The control device 8 comprises a measuring device 27 coupled to the electric machine 5 to detect electric quantities of the electric machine 5; a control unit 22 coupled to the detecting devices 6 for receiving the temperature T and magnetic induction B values and to the measuring device 27 for receiving the electric quantities of the electric machine. In more detail, the measuring device 27 is coupled to the windings 15 of the stator 9 and is arranged between the stator 9 and the converter 7 to detect voltages or currents of the windings 15 of the electric machine 5. According to one embodiment, the measuring device 27 is connected to the windings of the rotor 10 to measure the excitation currents.

The electric machine assembly 4 comprises further end temperature sensors 55 arranged on the stack pressing devices 16. The control unit 22 is connected to end temperature sensors 55 to receive the temperature T of the ends 21 of the electric machine 5.

The control unit 22 thus receives the temperature T and magnetic induction B values from the plurality of detecting devices 6, the temperature T values from the temperature sensors 55 and the electric quantities of the electric machine 5 from the measuring devices 27.

The control unit 22 calculates the reactive power of the electric machine 5 according to the electric quantities detected.

When the control unit 22 detects a negative reactive power, it is configured to act on the converter 7 to adjust the value of the reactive power on the basis of the detected magnetic induction B and temperature T values. In more detail, the control unit 22 is coupled to the converter 7 and sends a command signal ST to the converter 7. The control unit 22 compares the temperature T values of the detecting devices 6 and of the end temperature sensors 55 detected with temperature threshold values. The control unit 22 compares the magnetic induction B values detected with magnetic induction threshold values. If the reactive power is negative, and at least one of the values detected exceeds the threshold value, the control unit 22 acts on the command signal ST in order to control the reactive power and decrease its absolute value. In other words, the control unit 22 controls the converter 7 by means of a command signal ST which is defined on the basis of the temperature T and magnetic induction B values, in particular the axial component of the magnetic induction B of the electric machine 5.

In a further embodiment, the electric machine assembly comprises a further temperature sensor housed on the inside diameter of the electric machine, in particular along the air gap and the control unit is in communication with the further temperature sensor and acts on the command signal sent to the converter also on the basis of the temperature values of the further temperature sensor.

Lastly, it is clear that modifications and variations may be made to the present invention without departing from the scope of the present invention, as defined in the claims.

## Claims

1. An electric machine assembly comprising an electric machine (5) having a stator (9) and a rotor (10) rotatable about an axis (A); and at least one detecting device (6) housed inside the stator (9) and comprising a magnetic probe (41) for measuring a magnetic induction (B) value of the electric machine (5), and a thermal probe (42) for measuring a temperature (T) value of the electric machine (5), a support (40) and a casing (43); wherein the magnetic probe (41) and the thermal probe (42) are housed at the same detection point (6a) in the stator (9);
**characterized in that**
the stator (9) comprises a plurality of packs of ferromagnetic plates (11); wherein the support (40) is inserted in a channel (17) radial to the axis of rotation of the electric machine (5) and formed between two packs of plates (11).

2. The machine assembly according to claim 1, wherein the electric machine (5) extends along the axis (A) and comprises two axial end portions (9a); the detecting device (6) being housed in one of the axial end portions (9a) to detect an axial component of the magnetic induction (B).

3. The machine assembly according to any one of the preceding claims, comprising a plurality of detecting devices (6) arranged in the stator (9) and radially to the axis (A) at different distances from the axis (A), preferably the detecting devices (6) are housed on a plane (P) perpendicular to the axis (A).

4. The machine assembly according to any one of the preceding claims, wherein the stator (9) comprises a plurality of windings (15) that are associated with a plurality of phases; the detecting device (6) being arranged between the two windings (15) each associated with different phases.

5. The machine assembly according to any one of the preceding claims, wherein the stator (9) comprises a plurality of packs of ferromagnetic plates (11) and the detecting device (6) is glued to the plate (11) preferably by means of a silicone resin.

6. The machine assembly according to any one of the preceding claims, wherein the detecting device (6) is made according to any one of the claims from 10 to 14.

7. An energy generating plant, comprising an electric machine assembly (4) according to any one of the preceding claims; a measuring device (27) coupled to the electric machine (5) for detecting electric quantities of the electric machine (5); an electric energy converter (7) coupled to the electric machine assembly (4); and a control unit (22) coupled to the at least one detecting device (6) for receiving the temperature (T) and the magnetic induction (B) values, to the measuring device (27) for receiving the electric quantities of the electric machine (5), and to the converter (7); the control unit (22) being configured to:
- calculate the reactive power of the electric machine (5) according to the electric quantities detected;
- check the reactive power value according to the magnetic induction (B) values detected and to the temperature (T) values if the detected reactive power is negative.

8. The energy generating plant according to claim 7, wherein the control unit (22) is configured to compare the temperature (T) values detected with the threshold temperature values and the magnetic induction (B) values detected with the magnetic induction threshold values and control the reactive power so as to decrease its absolute value if at least one of the two values exceeds the threshold.

9. The electric energy generating plant according to claim 7 or 8, comprising at least one further temperature sensor (55) housed at least on the inside diameter of the electric machine (5) or on a stack pressing device (16) of the electric machine (5); the control unit (22) being in communication with the further temperature sensor (55) to receive the further temperature measurement and act to control the reactive power so as to decrease its absolute value if at least the further temperature measurement is greater than a further temperature threshold value.

10. A detecting device for detecting parameters of the electric machine assembly of any one of the claims 1 to 5; the detecting device (6) comprising:
a support (40) which extends predominantly along an axis (B); a magnetic probe (41) configured to detect a magnetic induction (B) value and housed along the support (40); a thermal probe (42) configured to detect a temperature (T) value and housed along the support (40); a
casing (43) which surrounds the thermal probe (42), the magnetic probe (41) and the support (40); and a coupling element (46) that is coupled to one end of the stator (9) of the electric machine (5), wherein the coupling element (46) is L-shaped to be coupled to one end of the stator (9).

11. The detecting device according to claim 10, wherein the magnetic probe (41) is of the Hall effect type and preferably the thermal probe (42) is a thermistor.

12. The detecting device according to claim 10 or 11, wherein the support (40) is made of an insulating material, preferably fibreglass.

13. The detecting device according to any one of claims from 10 to 12, wherein the casing (43) is made of an insulating material, preferably fibreglass.

14. The detecting device according to any one of the claims from 10 to 13, comprising said coupling element (46) configured to be coupled to the electric machine (5), and a seat (47) formed in the support (40) for housing the magnetic probe (41) and the thermal probe (42); the seat (47) being arranged at a determined distance (D) from the coupling element (46) to arrange the magnetic probe (41) and the thermal probe (42) inside the electric machine (5) in a predetermined detecting point (6a).

15. A control method for controlling the electric machine assembly of any one of the claims 1 to 6; the electric machine assembly comprising said rotary electric machine (5); the method comprising: detecting a magnetic induction (B) value of the electric machine (5), preferably an axial component value of the magnetic induction (B); detecting a temperature (T) value of the electric machine (5); detecting electric quantities of the electric machine (5) and calculating a reactive power value of the electric machine (5); adjusting the reactive power of the electric machine (5) if the reactive power is negative and on the basis of the detected magnetic induction (B) and/or temperature (T) values.

16. The control method according to claim 15, comprising the step of comparing the magnetic induction (B) value with a magnetic induction (B) threshold value and acting on the reactive power of the electric machine (5) if the magnetic induction (B) value exceeds the threshold value.

17. The control method according to claim 15 or 16, comprising the step of comparing the temperature (T) value with a temperature (T) threshold value and acting on the reactive power of the electric machine (5) if the temperature (T) value exceeds the temperature threshold value.

18. The control method according to claim 17, wherein the magnetic induction (B) value is detected between two windings (15) of a stator (9) of the electric machine (5) associated with two different phases of the stator (9).

19. The control method according to claim 18, comprising the step of detecting a plurality of temperatures (T) and magnetic induction (B) values in a plurality of detecting points (6) of a stator (9) of the electric machine (5) located radially to a rotation axis (A) of the electric machine (5) and spaced radially one with respect to the other.

20. A method for installing a detecting device in the electric machine assembly of any one of the claims 1 to 6; the detecting device (6) comprising a thermal probe (42), a magnetic probe (41) a support (40) and a casing (43); the method comprising the steps of: creating a seat (47) on the support (40) and housing the thermal probe (42) and the magnetic probe (41) in the seat (47); covering the support (40), the thermal probe (42) and the magnetic probe (41) with the casing (43); wherein the electric machine (5) comprises a stator (9) and a rotor (10); and the stator (9) comprises a plurality of packs of ferromagnetic plates (11); the method comprising inserting the support (40) in a channel (17) radial to the axis of rotation of the electric machine (5) and formed between two packs of plates (11).

## Patentansprüche

1. Elektrische Maschinenanordnung, umfassend eine elektrische Maschine (5), die einen Stator (9) und einen Rotor (10) hat, der um eine Achse drehbar ist (A); und mindestens eine Erfassungsvorrichtung (6), die in dem Stator (9) untergebracht ist und eine Magnetsonde (41) zum Messen eines Werts einer magnetischen Induktion (B) der elektrischen Maschine (5) und eine Temperatursonde (42) zum Messen eines Werts einer Temperatur (T) der elektrischen Maschine (5), eine Trägereinrichtung (40) und ein Gehäuse (43) umfasst; wobei die Magnetsonde (41) und die Temperatursonde (42) an demselben Erfassungspunkt (6a) in dem Stator (9) untergebracht sind;
**dadurch gekennzeichnet, dass**
der Stator (9) eine Mehrzahl von Paketen ferromagnetischer Platten (11) umfasst; während die Trägereinrichtung (40) in einen Spalt (17) eingesetzt ist, der sich radial zur Drehachse der elektrischen Maschine (5) erstreckt und zwischen zwei Paketen von Platten (11) ausgebildet ist.

2. Maschinenanordnung gemäß Anspruch 1, wobei die elektrische Maschine (5) sich entlang der Achse (A) erstreckt und zwei axiale Stirnteile (9a) umfasst; wobei die Erfassungsvorrichtung (6) in einem der axialen Stirnteile (9a) untergebracht ist, um eine axiale Komponente der magnetischen Induktion (B) zu erfassen.

3. Maschinenanordnung gemäß einem der vorhergehenden Ansprüche, umfassend eine Mehrzahl von Erfassungsvorrichtungen (6), die in dem Stator (9) angeordnet und radial zur Achse (A) an unterschiedlichen Abständen von der Achse (A) angeordnet sind, wobei die Erfassungsvorrichtungen (6) vorzugsweise in einer Ebene (P) senkrecht zur Achse (A) untergebracht sind.

4. Maschinenanordnung gemäß einem der vorhergehenden Ansprüche, wobei der Stator (9) eine Mehrzahl von Wicklungen (15) umfasst, die einer Mehrzahl von Phasen zugeordnet sind; wobei die Erfassungsvorrichtung (6) zwischen zwei Wicklungen (15), die jeweils unterschiedlichen Phasen zugeordnet sind, angeordnet ist.

5. Maschinenanordnung gemäß einem der vorhergehenden Ansprüche, wobei der Stator (9) eine Mehrzahl von Paketen ferromagnetischer Platten (11) umfasst und die Erfassungsvorrichtung (6) vorzugsweise mittels eines Silikonharzes auf die Platte (11) geklebt ist.

6. Maschinenanordnung gemäß einem der vorhergehenden Ansprüche, wobei die Erfassungsvorrichtung (6) gemäß einem der Ansprüche 10 bis 14 hergestellt ist.

7. Stromerzeugungsanlage, umfassend eine elektrische Maschinenanordnung (4) gemäß einem der vorhergehenden Ansprüche; eine Messvorrichtung (27), die mit der elektrischen Maschine (5) gekoppelt ist, um elektrische Messgrößen der elektrischen Maschine (5) zu messen; einen elektrischen Energiewandler (7), der mit der elektrischen Maschinenanordnung (4) gekoppelt ist; und eine Steuereinheit (22), die mit der mindestens einen Erfassungsvorrichtung (6) zum Empfangen der Werte der Temperatur (T) und der magnetischen Induktion (B), mit der Messvorrichtung (27) zum Empfangen der elektrischen Messgrößen der elektrischen Maschine (5) und mit dem Wandler (7) gekoppelt ist; wobei die Steuereinheit (22) dazu konfiguriert ist:
- die Blindleistung der elektrischen Maschine (5) gemäß den erfassten elektrischen Messgrößen zu berechnen;
- den Wert der Blindleistung gemäß den erfassten Werten der magnetischen Induktion (B) und den Werten der Temperatur (T) zu prüfen, wenn die erfasste Blindleistung negativ ist.

8. Stromerzeugungsanlage gemäß Anspruch 7, wobei die Steuereinheit (22) dazu konfiguriert ist, die erfassten Werte der Temperatur (T) mit den Temperaturschwellenwerten und die erfassten Werte der magnetischen Induktion (B) mit den Schwellenwerten der magnetischen Induktion zu vergleichen und die Blindleistung so zu steuern, dass ihr absoluter Wert verringert wird, wenn mindestens einer der beiden Werte den Schwellenwert übersteigt.

9. Stromerzeugungsanlage gemäß Anspruch 7 oder 8, umfassend mindestens einen weiteren Temperatursensor (55), der mindestens an dem Innendurchmesser der elektrischen Maschine (5) oder auf einer Stapelpressvorrichtung (16) der elektrischen Maschine (5) untergebracht ist; wobei die Steuereinheit (22) mit dem weiteren Temperatursensor (55) in Kommunikation ist, um die weitere Temperaturmessung zu empfangen und dazu aktiv zu werden, die Blindleistung so zu steuern, dass ihr absoluter Wert verringert wird, wenn mindestens die weitere Temperaturmessung größer als ein weiterer Temperaturschwellenwert ist.

10. Erfassungsvorrichtung zum Erfassen von Parametern der elektrischen Maschinenanordnung gemäß einem der Ansprüche 1 bis 5; wobei die Erfassungsvorrichtung (6) umfasst:
eine Trägereinrichtung (40), die sich überwiegend entlang einer Achse (B) erstreckt; eine Magnetsonde (41), die dazu konfiguriert ist, einen Wert einer magnetischen Induktion (B) zu erfassen, und entlang der Trägereinrichtung (40) untergebracht ist; eine Temperatursonde (42), die dazu konfiguriert ist, einen Wert einer Temperatur (T) zu erfassen, und entlang der Trägereinrichtung untergebracht ist; ein Gehäuse (43), das die Temperatursonde (42), die Magnetsonde (41) und die Trägereinrichtung (40) umgibt; und ein Kopplungselement (46), das mit einem Ende des Stators (9) der elektrischen Maschine (5) gekoppelt ist, wobei das Kopplungselement (46) L-förmig ist, um mit einem Ende des Stators (9) gekoppelt zu werden.

11. Erfassungsvorrichtung gemäß Anspruch 10, wobei die Magnetsonde (41) ein Hall-Sensor ist und die Temperatursonde (42) vorzugsweise ein Thermistor ist.

12. Erfassungsvorrichtung gemäß Anspruch 10 oder 11, wobei die Trägereinrichtung (40) aus einem isolierenden Werkstoff, vorzugsweise Fiberglas, hergestellt ist.

13. Erfassungsvorrichtung gemäß einem der Ansprüche 10 bis 12, wobei das Gehäuse (43) aus einem isolierenden Werkstoff, vorzugsweise Fiberglas, hergestellt ist.

14. Erfassungsvorrichtung gemäß einem der Ansprüche 10 bis 13, umfassend das Kopplungselement (46), das dazu konfiguriert ist, mit der elektrischen Maschine (5) gekoppelt zu sein, und einen Sitz (47), der in der Trägereinrichtung (40) ausgebildet ist, zum Unterbringen der Magnetsonde (41) und der Temperatursonde (42); wobei der Sitz (47) in einem vorbestimmten Abstand (D) von dem Kopplungselement (46) angeordnet ist, um die Magnetsonde (41) und die Temperatursonde (42) im Inneren der elektrischen Maschine (5) an einem vorbestimmten Erfassungspunkt (6a) anzuordnen.

15. Steuerungsverfahren zum Steuern der elektrischen Maschinenanordnung gemäß einem der Ansprüche 1 bis 6; wobei die elektrische Maschinenanordnung die rotierende elektrische Maschine (5) umfasst;
wobei das Verfahren umfasst: Erfassen eines Werts einer magnetischen Induktion (B) der elektrischen Maschine (5), vorzugsweise eines Werts einer axialen Komponente der magnetischen Induktion (B); Erfassen eines Werts einer Temperatur (T) der elektrischen Maschine (5); Erfassen elektrischer Messgrößen der elektrischen Maschine (5) und Berechnen eines Werts einer Blindleistung der elektrischen Maschine (5); Einstellen der Blindleistung der elektrischen Maschine (5), wenn die Blindleistung negativ ist, und auf der Basis der Werte der erfassten magnetischen Induktion (B) und/oder Temperatur (T).

16. Steuerungsverfahren gemäß Anspruch 15, umfassend den Schritt des Vergleichens des Werts der magnetischen Induktion (B) mit einem Schwellenwert der magnetischen Induktion (B) und Einwirken auf die Blindleistung der elektrischen Maschine (5), wenn der Wert der magnetischen Induktion (B) den Schwellenwert übersteigt.

17. Steuerungsverfahren gemäß Anspruch 15 oder 16, umfassend den Schritt des Vergleichens des Werts der Temperatur (T) mit einem Schwellenwert der Temperatur (T) und Einwirken auf die Blindleistung der elektrischen Maschine (5), wenn der Wert der Temperatur (T) den Temperaturschwellenwert übersteigt.

18. Steuerungsverfahren gemäß Anspruch 17, wobei der Wert der magnetischen Induktion (B) zwischen zwei Wicklungen (15) des Stators (9) der elektrischen Maschine (5) erfasst wird, die zwei unterschiedlichen Phasen des Stators (9) zugeordnet sind.

19. Steuerungsverfahren gemäß Anspruch 18, umfassend den Schritt des Erfassens einer Mehrzahl von Werten von Temperaturen (T) und magnetischer Induktion (B) an einer Mehrzahl von Erfassungspunkten (6) eines Stators (9) der elektrischen Maschine (5), die radial zu einer Drehachse (A) der elektrischen Maschine (5) angeordnet und radial voneinander beabstandet sind.

20. Verfahren zum Einbauen einer Erfassungsvorrichtung in der elektrischen Maschinenanordnung gemäß einem der Ansprüche 1 bis 6; wobei die Erfassungsvorrichtung (6) eine Temperatursonde (42), eine Magnetsonde (41), eine Trägereinrichtung (40) und ein Gehäuse (43) umfasst; wobei das Verfahren die folgenden Schritte umfasst:
Herstellen eines Sitzes (47) an der Trägereinrichtung (40) und Unterbringen der Temperatursonde (42) und der Magnetsonde (41) in dem Sitz (47); Abdecken der Trägereinrichtung (40), der Temperatursonde (42) und der Magnetsonde (41) mit dem Gehäuse (43); wobei die elektrische Maschine (5) einen Stator (9) und einen Rotor (10) umfasst; und der Stator (9) eine Mehrzahl von Paketen ferromagnetischer Platten (11) umfasst; wobei das Verfahren ein Einsetzen der Trägereinrichtung (40) in einen Spalt (17) umfasst, der sich radial zur Drehachse der elektrischen Maschine (5) erstreckt und zwischen zwei Paketen von Platten (11) ausgebildet ist.

## Revendications

1. Ensemble de machine électrique comprenant une machine électrique (5) ayant un stator (9) et un rotor (10) pouvant tourner autour d'un axe (A) ; et au moins un dispositif de détection (6) logé à l'intérieur du stator (9) et comprenant une sonde magnétique (41) pour mesurer une valeur d'induction magnétique (B) de la machine électrique (5), et une sonde thermique (42) pour mesurer une valeur de température (T) de la machine électrique (5), un support (40) et un carter (43) ; dans lequel la sonde magnétique (41) et la sonde thermique (42) sont logées au niveau du même point de détection (6a) dans le stator (9) ;
**caractérisé en ce que**
le stator (9) comprend une pluralité de paquets de plaques ferromagnétiques (11) ; dans lequel le support (40) est inséré dans un canal (17) radial à l'axe de rotation de la machine électrique (5) et formé entre deux paquets de plaques (11).

2. Ensemble de machine selon la revendication 1, dans lequel la machine électrique (5) s'étend le long de l'axe (A) et comprend deux portions d'extrémité axiales (9a) ; le dispositif de détection (6) étant logé dans l'une des portions d'extrémité axiales (9a) pour détecter un composant axial de l'induction magnétique (B).

3. Ensemble de machine selon l'une quelconque des revendications précédentes, comprenant une pluralité de dispositifs de détection (6) agencés dans le stator (9) et radialement à l'axe (A) à des distances différentes de l'axe (A), de préférence les dispositifs de détection (6) sont logés sur un plan (P) perpendiculaire à l'axe (A).

4. Ensemble de machine selon l'une quelconque des revendications précédentes, dans lequel le stator (9) comprend une pluralité d'enroulements (15) qui sont associés à une pluralité de phases ; le dispositif de détection (6) étant agencé entre les deux enroulements (15), chacun associé à des phases différentes.

5. Ensemble de machine selon l'une quelconque des revendications précédentes, dans lequel le stator (9) comprend une pluralité de paquets de plaques ferromagnétiques (11) et le dispositif de détection (6) est collé à la plaque (11) de préférence au moyen d'une résine de silicone.

6. Ensemble de machine selon l'une quelconque des revendications précédentes, dans lequel le dispositif de détection (6) est fabriqué selon l'une quelconque des revendications 10 à 14.

7. Installation de production d'énergie électrique, comprenant un ensemble de machine électrique (4) selon l'une quelconque des revendications précédentes ; un dispositif de mesure (27) couplé à la machine électrique (5) pour détecter des quantités électriques de la machine électrique (5) ; un convertisseur d'énergie électrique (7) couplé à l'ensemble de machine électrique (4) ; et une unité de commande (22) couplée à l'au moins un dispositif de détection (6) pour recevoir les valeurs de la température (T) et de l'induction magnétique (B), au dispositif de mesure (27) pour recevoir les quantités électriques de la machine électrique (5) et au convertisseur (7) ; l'unité de commande (22) étant configurée pour :
- calculer la puissance réactive de la machine électrique (5) selon les quantités électriques détectées ;
- vérifier la valeur de puissance réactive selon les valeurs d'induction magnétique (B) détectées et les valeurs de température (T) si la puissance réactive détectée est négative.

8. Installation de production d'énergie électrique selon la revendication 7, dans laquelle l'unité de commande (22) est configurée pour comparer les valeurs de température (T) détectées aux valeurs de température seuil et les valeurs d'induction magnétique (B) détectées aux valeurs seuil d'induction magnétique et commander la puissance réactive de sorte à réduire sa valeur absolue si au moins l'une des deux valeurs dépasse le seuil.

9. Installation de production d'énergie électrique selon la revendication 7 ou 8, comprenant au moins un capteur de température supplémentaire (55) logé au moins sur le diamètre intérieur de la machine électrique (5) ou sur un dispositif de pressage d'empilement (16) de la machine électrique (5) ; l'unité de commande (22) étant en communication avec le capteur de température supplémentaire (55) pour recevoir la mesure de température supplémentaire et agir pour commander la puissance réactive de sorte à réduire sa valeur absolue si au moins la mesure de température supplémentaire est supérieure à une valeur seuil de température supplémentaire.

10. Dispositif de détection pour détecter des paramètres de l'ensemble de machine électrique selon l'une quelconque des revendications 1 à 5 ;
le dispositif de détection (6) comprenant :
un support (40) qui s'étend majoritairement le long d'un axe (B) ; une sonde magnétique (41) configurée pour détecter une valeur d'induction magnétique (B) et logée le long du support (40) ; une sonde thermique (42) configurée pour détecter une valeur de température (T) et logée le long du support (40) ; un carter (43) qui entoure la sonde thermique (42), la sonde magnétique (41) et le support (40) ; et un élément de couplage (46) qui est couplé à une extrémité du stator (9) de la machine électrique (5), dans lequel l'élément de couplage (46) est en forme de L pour être couplé à une extrémité du stator (9).

11. Dispositif de détection selon la revendication 10, dans lequel la sonde magnétique (41) est du type à effet Hall et de préférence la sonde thermique (42) est une thermistance.

12. Dispositif de détection selon la revendication 10 ou 11, dans lequel le support (40) est composé d'un matériau isolant, de préférence de la fibre de verre.

13. Dispositif de détection selon l'une quelconque des revendications 10 à 12, dans lequel le carter (43) est composé d'un matériau isolant, de préférence de la fibre de verre.

14. Dispositif de détection selon l'une quelconque des revendications 10 à 13, comprenant ledit élément de couplage (46) configuré pour être couplé à la machine électrique (5), et un siège (47) formé dans le support (40) pour loger la sonde magnétique (41) et la sonde thermique (42) ; le siège (47) étant agencé à une distance déterminée (D) de l'élément de couplage (46) pour agencer la sonde magnétique (41) et la sonde thermique (42) à l'intérieur de la machine électrique (5) dans un point de détection prédéterminée (6a).

15. Procédé de commande pour commander l'ensemble de machine électrique selon l'une quelconque des revendications 1 à 6 ; l'ensemble de machine électrique comprenant ladite machine électrique rotative (5) ;
le procédé comprenant : la détection d'une valeur d'induction magnétique (B) de la machine électrique (5), de préférence d'une valeur de composant axial de l'induction magnétique (B) ; la détection d'une valeur de température (T) de la machine électrique (5) ; la détection de quantités électriques de la machine électrique (5) et le calcul d'une valeur de puissance réactive de la machine électrique (5) ; l'ajustement de la puissance réactive de la machine électrique (5) si la puissance réactive est négative et sur la base des valeurs d'induction magnétique (B) et/ou de température (T) détectées.

16. Procédé de commande selon la revendication 15, comprenant l'étape de comparaison de la valeur d'induction magnétique (B) à une valeur seuil d'induction magnétique (B) et d'action sur la puissance réactive de la machine électrique (5) si la valeur d'induction magnétique (B) dépasse la valeur seuil.

17. Procédé de commande selon la revendication 15 ou 16, comprenant l'étape de comparaison de la valeur de température (T) à une valeur seuil de température (T) et d'action sur la puissance réactive de la machine électrique (5) si la valeur de température (T) dépasse la valeur seuil de température.

18. Procédé de commande selon la revendication 17, dans lequel la valeur d'induction magnétique (B) est détectée entre deux enroulements (15) d'un stator (9) de la machine électrique (5) associés à deux phases différentes du stator (9).

19. Procédé de commande selon la revendication 18, comprenant l'étape de détection d'une pluralité de valeurs de températures (T) et d'induction magnétique (B) dans une pluralité de points de détection (6) d'un stator (9) de la machine électrique (5) situés radialement à un axe de rotation (A) de la machine électrique (5) et espacés radialement l'un par rapport à l'autre.

20. Procédé d'installation d'un dispositif de détection dans l'ensemble de machine électrique selon l'une quelconque des revendications 1 à 6 ; le dispositif de détection (6) comprenant une sonde thermique (42), une sonde magnétique (41), un support (40) et un carter (43) ; le procédé comprenant les étapes de : création d'un siège (47) sur le support (40) et de logement de la sonde thermique (42) et de la sonde magnétique (41) dans le siège (47) ; recouvrement du support (40), de la sonde thermique (42) et de la sonde magnétique (41) avec le carter (43) ; dans lequel la machine électrique (5) comprend un stator (9) et un rotor (10) ; et le stator (9) comprend une pluralité de paquets de plaques ferromagnétiques (11) ; le procédé comprenant l'insertion du support (40) dans un canal (17) radial à l'axe de rotation de la machine électrique (5) et formé entre deux paquets de plaques (11).
